**Europäisches Patentamt**

**European Patent Office**

**Office européen des brevets**

(19)

(11) Veröffentlichungsnummer : **0 327 815 B1**

(12)

# EUROPÄISCHE PATENTSCHRIFT

(45) Veröffentlichungstag der Patentschrift :
**15.04.92 Patentblatt 92/16**

(51) Int. Cl.$^5$ : **B01J 21/12,** B01J 35/10,
B01J 37/00, B01J 37/08

(21) Anmeldenummer : **89100408.7**

(22) Anmeldetag : **11.01.89**

(54) **Presslinge auf Basis von pyrogen hergestelltem Siliciumdioxid-Aluminiumoxid-Mischoxid, Verfahren zu ihrer Herstellung und ihre Verwendung.**

(30) Priorität : **09.02.88 DE 3803899**

(43) Veröffentlichungstag der Anmeldung :
**16.08.89 Patentblatt 89/33**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**EP-A- 0 045 159**
**EP-A- 0 152 599**
**US-A- 3 451 947**
**US-A- 4 174 301**
**US-A- 4 242 236**
**US-A- 4 310 441**
**US-A- 4 508 849**

(73) Patentinhaber : **Degussa Aktiengesellschaft**
**Weissfrauenstrasse 9**
**W-6000 Frankfurt am Main 1 (DE)**

(72) Erfinder : **Deller, Klaus, Dr.**
**Friedhofstrasse 47**
**W-6452 Hainburg (DE)**
Erfinder : **Klingel, Reinhard, Dr.**
**Taunusstrasse 6**
**W-8755 Alzenau (DE)**
Erfinder : **Krause, Helmfried**
**Odenwaldstrasse 39**
**W-6458 Rodenbach (DE)**
Erfinder : **Bauer, Klaus P.**
**Kantstrasse 17**
**W-6457 Dörnigheim (DE)**

EP 0 327 815 B1

**Beschreibung**

Die Erfindung betrifft Preßlinge auf Basis von pyrogen hergestelltem Siliciumdioxid-Aluminiumoxid-Mischoxid, das Verfahren zu ihrer Herstellung und ihre Verwendung als Katalysatorträger oder Katalysator.

Pyrogen hergestellte Oxide zeichnen sich durch extreme Feinteiligkeit und entsprechend hohe spezifische Oberflächen, sehr hohe Reinheit, sphärische Teilchenform und das Fehlen von Poren aus. Aufgrund dieser Eigenschaften finden die pyrogen hergestellten Oxide zunehmend Interesse als Träger für Katalysatoren (D. Koth, H. Ferch, Chem. Ing. Techn. 52, 628 (1980).

Da pyrogen hergestellte Oxide besonders feinteilig sind, bereitet die Tablettierung zu Katalysatorträgern bzw. Katalysatoren einige Schwierigkeiten.

Aus der DE-OS 31 32 674 ist ein Verfahren zur Herstellung von Preßlingen bekannt, bei dem Kieselsol als Bindemittel verwendet wird.

Aus der DE-OS 32 17 751 ist die Verpressung von pyrogen hergestelltem Titandioxid bekannt, bei welchem organische Säuren oder sauer reagierende Salze als intermediäre Bindemittel verwendet werden.

Aus der DE-PS 21 00 778 ist es bekannt, Granulate auf Basis pyrogen hergestellter Siliciumdioxide zur Herstellung von z. B. Vinylacetate als Katalysatorträger einzusetzen.

Diese bekannten Verfahren haben den Nachteil, daß die erhaltenen Preßlinge für bestimmte katalytische Reaktionen wie z. B. die Vinylacetatherstellung aus Äthylen, Essigsäure und Sauerstoff oder die Hydratisierung von Äthylen zu Äthanol nicht die gewünschten optimalen Eigenschaften in Bezug auf die Bruchfestigkeit, das Porenvolumen und die Porenverteilung aufweisen.

Gegenstand der Erfindung sind Preßlinge auf Basis von pyrogen hergestelltem Siliciumdioxid-Aluminiumoxid -Mischoxid mit den folgenden physikalisch-chemischen Kenndaten:

| | |
|---|---|
| Außendurchmesser | 2 bis 15 mm |
| BET-Oberfläche | 90 bis 200 $m^2$ / g |
| Porenvolumen | 0,6 bis 1,3 ml / g |
| Bruchfestigkeit | 30 bis 120 N |
| Porenverteilung | keine Poren mit Durchmesser <5 nm, mindestens 80 % der Poren im Bereich von 5 bis 40 nm Durchmesser |
| Zusammensetzung | > 75 Gew.-% $SiO_2$ |
| | Rest $Al_2O_3$ |

Ein weiterer Gegenstand der Erfindung ist ein Verfahren zur Herstellung von Preßlingen auf Basis von pyrogen hergestelltem Siliciumdioxid-Aluminiumoxid-Mischoxid mit den folgenden physikalisch-chemischen Kenndaten:

| | |
|---|---|
| Außendurchmesser | 2 bis 15 mm |
| BET-Oberfläche | 90 bis 200 $m^2$ / g |
| Porenvolumen | 0,6 bis 1,3 ml / g |
| Bruchfestigkeit | 30 bis 120 N |
| Porenverteilung | keine Poren mit Durchmesser <5 nm, mindestens 80 % der Poren im Bereich von 5 bis 40 nm Durchmesser |
| Zusammensetzung | > 75 Gew.-% $SiO_2$ |
| | Rest $Al_2O_3$ |

welches dadurch gekennzeichnet ist, daß man pyrogen hergestelltes Siliciumdioxid-Aluminiumoxid-Mischoxid mit Kaolin und/oder Graphit, Zucker, Stärke, Harnstoff, Glasurfrittenpulver, Mikrowachs unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 6 Stunden bei einer Temperatur von 400 bis 1050 °C tempert.

In einer besonderen Ausführungsform der Erfindung kann der Harnstoff in wässriger Lösung hinzugegeben werden.

Zur Durchführung des erfindungsgemäßen Verfahrens sind prinzipiell alle Mischer oder Mühlen geeignet, die eine gute Homogenisierung ermöglichen, wie z. B. Schaufel-, Wirbelschicht-, Kreisel- oder Luftstrommischer. Besonders geeignet sind Mischer, mit denen eine zusätzliche Verdichtung des Mischgutes möglich ist, z. B. Pflugscharmischer, Kollergänge oder Kugelmühlen. Nach dem Homogenisieren kann eine weitgehende Trocknung bei 80 - 120 °C erfolgen, so daß man nach dem Zerkleinern ein rieselfähiges Pulver erhält. Die Herstellung der Preßlinge kann auf Stempelpressen, Exzenterpressen, Strangpressen oder Rundlaufpressen als auch auf Kompaktoren erfolgen.

In einer bevorzugten Ausführungsform der Erfindung kann die Mischung vor dem Verpressen die folgende Zusammensetzung aufweisen:

50     -90 Gew.-% $SiO_2$-$Al_2O_3$-Mischoxid, vorzugsweise 70 - 85 Gew.-%

0,1      - 8 Gew.-% Kaolin, vorzugsweise 1 - 5 Gew.-% und/oder
0,1      - 10 Gew.-% Graphit, vorzugsweise 1 - 5 Gew.-%,
0,1      - 10 Gew.-% Wachs, vorzugsweise 1 - 5 Gew.-%,
0,1      - 10 Gew.-% Frittenpulver, vorzugsweise 1 - 5 Gew.-%,
5      - 45 Gew.-% Harnstoff, vorzugsweise 10 - 30 Gew.-%.

In einer besonders bevorzugten Ausführungsform der Erfindung kann die Mischung vor dem Verpressen die folgende Zusammensetzung aufweisen:

75      - 79 Gew. -% $SiO_2/Al_2O_3$ -Mischoxid
3      - 5 Gew.-T Graphit
3      - 5 Gew.-% Kaolin
13      - 17 Gew.-% Harnstoff

Die Preßlinge können die verschiedensten Formen, wie z. B. zylinderisch, kugelförmig, ringförmig mit einem Außendurchmesser von 2 bis 15 nm aufweisen.

Die Preßlinge werden bei 400 - 1050 °C 30 Minuten bis 6 Stunden getempert.

Durch Variation der Einsatzstoffmengen und des Preßdruckes kann die Bruchfestigkeit, die spez. Gesamtoberfläche und das Porenvolumen in einem gewissen Rahmen verändert werden.

Die erfindungsgemäßen Preßlinge können entweder direkt als Katalysatoren Verwendung finden oder als Katalysatorträger, indem die Formkörper während oder nach ihrer Herstellung mit einer Lösung einer katalytisch wirksamen Substanz getränkt und ggf. durch eine geeignete Nachbehandlung aktiviert werden.

Insbesondere lassen sich die Preßlinge aus pyrogen hergestelltem Siliciumdioxid-Aluminiumoxid-Mischoxid in der Anwendung als Träger für den Katalysator, bei der Vinylacetatsynthese aus Äthylen, Essigsäure und Sauerstoff sowie als Katalysator im Ethylenhydratisierungsverfahren besonders gut verwenden.

Die erfindungsgemäßen Preßlinge weisen die folgenden Vorteile auf:

Hohe Festigkeit

Hohes Porenvolumen

Der überwiegende Anteil der Poren liegt im Mesoporenbereich

Keine Mikroporen <5 nm

Beispiele

Als pyrogen hergestelltes Siliciumdioxid-Aluminiumoxid-Mischoxid werden Mischoxide mit den folgenden physikalisch-chemischen kenndaten eingesetzt:

3

|  | | Aerosil MOX 170 | COK 84 |
|---|---|---|---|
| Oberfläche nach BET | m²/g | 170 ± 30 | 170 ± 30 |
| Mittlere Größe der Primärteilchen | nm | 15 | - |
| Stampfdichte 1) normale Ware | g/l | ca. 50 | 50 |
| Trocknungsverlust 2) (2 Stunden bei 105 °C) | % | < 1,5 | < 1,5 |
| Glühverlust 2) 5) (2 Stunden bei 1000 °C) | % | < 1 | < 1 |
| pH-Wert 3) (in 4 %iger wäßriger Dispersion | | 3,6 - 4,3 | 3,6 - 4,3 |
| $SiO_2$ 6) | % | > 98,3 | 82 - 86 |
| $Al_2O_3$ 6) | % | 0,3 - 1,3 | 14 - 18 |
| $Fe_2O_3$ 6) | % | < 0,01 | < 0,1 |
| $TiO_2$ 6) | % | < 0,03 | < 0,03 |
| HCl 6) 8) | % | < 0,025 | 0,1 |
| Siebrückstand 4) | % | < 0,1 | < 0,1 |

1) nach DIN 53 194

2) nach DIN 55 921

3) nach DIN 53 200

4) nach DIN 53 580

5) bezogen auf die 2 Stunden bei 105 °C getrocknete Substanz

6) bezogen auf die 2 Stunden bei 1000 °C geglühte Substanz

8) HCl-Gehalt ist Bestandteil des Glühverlustes

Die BET-Oberfläche wird gemäß DIN 66 131 mit Stickstoff bestimmt.
Das Porenvolumen wird rechnerisch aus der Summe von Mikro-, Meso- und Makroporen bestimmt.
Die Bruchfestigkeit wird mittels Bruchfestigkeittester der Fa. Ewerka, Typ TBH 28, bestimmt.
Die Bestimmung der Mikro- und Mesoporen erfolgt durch die Aufnahme einer $N_2$-Isotherme und deren Aus-

wertung nach BET, de Boer und Barret, Joyner, Halenda.

Die Bestimmung der Makroporen erfolgt durch das Hg-Einpressverfahren.

Beispiel 1

77 Gew.-% Aerosil MOX 170, 4 Gew.-% Graphit, 4 Gew.-% Kaolin, 15 Gew.-% Harnstoff werden mit Wasser in einem Lödige-Mischer homogenisiert. Die erhaltene Mischung wird bei 100 °C getrocknet und anschließend durch ein 1 mm Sieb gedrückt. Die Verpressung erfolgt auf einer Rundläuferschnellpresse (Firma Fette). Die anschließende Temperung wird bei 800 °C und 2 Stunden durchgeführt.

Die erhaltenen Preßlinge weisen die folgenden physikalisch-chemischen Kenndaten auf:

| | |
|---|---|
| Tablettengröße: | Durchmesser 5 mm, Höhe 5,5 mm |
| Bruchfestigkeit: | 56 N |
| BET-Oberfläche: | 154 $m^2$ / g |
| Porenvolumen: | 0,78 ml / g |
| Zusammensetzung: | 96,5 Gew.-% $SiO_2$ |
| | 3,5 Gew.-% $Al_2O_3$ |
| Porenverteilung | keine Poren mit Durchmesser <5 nm, 78 % der Poren im Bereich von 5 bis 40 nm Durchmesser |

Beispiel 2

77 % Aerosil MOX 170
4 % Kaolin
4 % Graphit und
15 % Harnstoff werden gemäß Beispiel 1 zu preßlingen verarbeitet.

Die erhaltenen Preßlinge weisen die folgenden physikalisch-chemischen Kenndaten auf:

| | |
|---|---|
| Tablettendurchmesser | 6 mm |
| BET-Oberfläche | 112 $m^2$ / g |
| Porenvolumen | 0,90 ml / g |
| Porenverteilung | keine Poren mit Durchmesser <5 nm, 77 % der Poren im Bereich von 5 bis 40 nm Durchmesser |
| Bruchfestigkeit | 94 N |
| Zusammensetzung: | 96,5 Gew.-% $SiO_2$ |
| | 3,5 Gew.% $Al_2O_3$ |

Beispiel 3

77 % Aerosil MOX 170
4 % Degussa-Frittenpulver
4 % Graphit und
15 % Harnstoff werden unter Zusatz von Wasser homogenisiert und zu Strangpreßlingen verarbeitet. Die Temperung erfolgt bei einer Temperatur von 800 °C.

Die erhaltenen Preßlinge weisen die folgenden physikalisch-chemischen Kenndaten auf:

| | |
|---|---|
| Tablettendurchmesser | 3 mm |
| BET-Oberfläche | 173 $m^2$ / g |
| Porenvolumen | 0,86 ml / g |
| Bruchfestigkeit | 33 N |
| Zusammensetzung | 94 % $SiO_2$ |
| | 5 % Fritte |
| Porenverteilung | keine Poren mit Durchmesser <5 nm, 80 % der Poren im Bereich von 5 bis 40 nm Durchmesser |

Beispiel 4

77 % Aerosil MOX 170
3,8 % Kaolin und
19,2 % Harnstoff werden unter Zusatz von Wasser gemäß Beispiel 1 homogenisiert und mittels der Korsch-Exmenterpresse zu Tabletten verarbeitet.

5

Die Temperung erfolgt bei einer Temperatur von 600 °C.
Die erhaltenen Preßlinge weisen die folgenden physikalisch-chemischen Kenndaten auf:

| | |
|---|---|
| Tablettendurchmesser | 8,2 mm |
| BET-Oberfläche | 162 m$^2$ / g |
| Porenvolumen | 1,2 ml / g |
| Bruchfestigkeit | 69 N |
| Zusammensetzung | 96,5 Gew.-% SiO$_2$ |
| | 3,5 Gew.-% Al$_2$O$_3$ |
| Porenverteilung | keine Poren mit Durchmesser <5 nm, 76 % der Poren im Bereich von 5 bis 40 nm Durchmesser |

Beispiel 5

80 %   Aerosil MOX 170
4 %   Graphit und
16 %   Harnstoff werden unter Zusatz von Wasser gemäß Beispiel 1 homogenisiert und mittels der Korsch-Excenterpresse zu Tabletten verarbeitet.
Die Temperung erfolgt bei einer Temperatur von 1000 °C.
Die erhaltenen Preßlinge weisen die folgenden physikalisch-chemischen Kenndaten auf:

| | |
|---|---|
| Tablettendurchmesser | 8,2 mm |
| BET-Oberfläche | 150 m$^2$ / g |
| Porenvolumen | 1,08 ml / g |
| Bruchfestigkeit | 59 N |
| Zusammensetzung | 99 Gew.-% SiO$_2$ |
| | 1 Gew.-% Al$_2$O$_3$ |
| Porenverteilung | keine Poren mit Durchmesser <5 nm, 75 % der Poren im Bereich von 5 bis 40 nm Durchmesser |

Beispiel 6

77 %   Aerosil MOX 170
3,5 %   Kaolin
15,4 %   Harnstoff und
3,8 %   Mikrowachs werden unter Zusatz von Wasser gemäß Beispiel 1 homogenisiert und mittels der Korsch-Excenterpresse zu Tabletten verarbeitet.
Die Temperung erfolgt bei einer Temperatur von 650 °C.
Die erhaltenen Preßlinge weisen die folgenden physikalisch-chemischen Kenndaten auf:

| | |
|---|---|
| Tablettendurchmesser | 8,2 mm |
| BET-Oberfläche | 154 m$^2$ / g |
| Porenvolumen | 0,96 ml / g |
| Bruchfestigkeit | 88 N |
| Zusammensetzung | 96,5 Gew.-% SiO$_2$ |
| | 3,5 Gew.-% Al$_2$O$_3$ |
| Porenverteilung | keine Poren mit Durchmesser <5 nm, 76 % der Poren im Bereich von 5 bis 40 nm Durchmesser |

Beispiel 7

77 Gew.-%   Aerosil COK 84
4 Gew.-%   Graphit
4 Gew.-%   Kaolin
15 Gew.-%   Harnstoff werden unter Zusatz von Wasser gemäß Beispiel 1 homogenisiert und mittels Korsch-Excenterpresse zu Preßlingen verpreßt.
Die Temperung erfolgt bei 800 °C.
Die erhaltenen Preßlinge weisen folgende physikalisch-chemischen Kenndaten auf:

| | |
|---|---|
| Tablettendurchmesser | 9 mm |
| Bruchfestigkeit | 76 KN/Tablette |
| BET-Oberfläche | 152 m$^2$ / g |

6

| Porenvolumen | 0,82 ml / g |
| Porenverteilung | keine Poren mit Durchmesser <5 nm, 98 % >10 nm |
| Zusammensetzung | 81 % $SiO_2$ |
| | 19 % $Al_2O_3$ |

## Patentansprüche

1. Preßlinge auf Basis von pyrogen hergestelltem Siliciumdioxid-Aluminiumoxid-Mischoxid mit den folgenden physikalisch-chemischen Kenndaten:

| Außendurchmesser | 2 bis 15 mm |
| BET-Oberfläche | 90 bis 200 $m^2$ / g |
| Porenvolumen | 0,6 bis 1,3 ml / g |
| Porenverteilung | keine Poren mit Durchmesser <5 nm, mindestens 80 % der Poren im Bereich von 5 bis 40 nm |
| Bruchfestigkeit | 30 bis 120 N |
| Zusammensetzung | > 75 Gew.-% $SiO_2$ |
| | Rest $Al_2O_3$ |

2. Verfahren zur Herstellung von Preßlingen auf Basis von pyrogen hergestelltem Siliciumdioxid-Aluminiumoxid-Mischoxid mit den folgenden physikalisch-chemischen Kenndaten:

| Außendurchmesser | 2 bis 15 mm |
| BET-Oberfläche | 90 bis 200 $m^2$ / g |
| Porenvolumen | 0,6 bis 1,3 ml / g |
| Bruchfestigkeit | 30 bis 120 N |
| Porenverteilung | keine Poren mit Durchmesser <5 nm, mindestens 80 % der Poren im Bereich von 5 bis 40 nm Durchmesser |
| Zusammensetzung | > 75 Gew.-% $SiO_2$ |
| | Rest $Al_2O_3$ |

dadurch gekennzeichnet, daß man pyrogen hergestelltes Siliciumdioxid-Aluminiumoxid-Mischoxid mit Kaolin und/oder Graphit, Zucker, Stärke, Harnstoff, Glasurfrittenpulver, Mikrowachs unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 6 Stunden bei einer Temperatur von 400 bis 1050 °C tempert.

3. Verwendung der Preßlinge gemäß Anspruch 1 als Katalysatorträger oder Katalysator.

## Claims

1. Compacts based on pyrogenically prepared silicon dioxide/aluminium oxide mixed oxide and having the following physical-chemical characteristic data:

| External diameter | 2 to 15 mm |
| BET surface area | 90 to 200 $m^2$/g |
| Pore volume | 0.6 to 1.3 ml/g |
| Pore distribution | no pores <5 nm in diameter, at least 80% of the pores in the range 5 to 40 nm |
| Breaking strenght | 30 to 120 N |
| Composition | >75% by weight of $SiO_2$ |
| | remainder $Al_2O_3$ |

2. Process for the production of compacts based on pyrogenically prepared silicon dioxide/aluminium oxide mixed oxide and having the following physical-chemical characteristic data:

| External diameter | 2 to 15 mm |
| BET surface area | 90 to 200 $m^2$/g |
| Pore volume | 0.6 to 1.3 ml/g |
| Breaking strenght | 30 to 120 N |
| Pore distribution | no pores <5 nm in diameter, at least 80% of the pores in the range 5 to 40 nm in diameter |
| Composition | >75% by weight of $SiO_2$ |
| | remainder $Al_2O_3$, |

characterized in that pyrogenically prepared silicon dioxide/aluminium oxide mixed oxide is homogenized with kaolin and/or graphite, sugar, starch, urea, glaze frit power or micrawax with addition of water, the mixture is dried at a temperature of from 80 to 120°C and comminuted to form a powder, the powder is pressed to form compacts, and the compacts are conditioned at a temperature of from 400 to 1,050°C for a period of 0.5 to 6 hours.

3. Use of the compacts according to Claim 1 as a catalyst support or catalyst.


**Revendications**

1. Pièces moulées constituées par un mélange de silice et d'alumine produits par pyrogénation ayant les données caractéristiques physico-chimiques suivantes :

diamètre extérieur : 2 à 15 mm
surface - BET : 90 à 200 m² / g
volume des pores : 0,6 à 1,3 ml / g
répartition des pores : aucun pore de diamètre <5 nm
: au moins 80% des pores de
: diamètre dans la zone de 5 à
: 40 nm.
résistance à la rupture : 30 à 120 N
Composition : >75% en poids $SiO_2$
: le reste $Al_2O_3$

2. procédé pour la préparation de pièces moulées constituées par un mélange de silice et d'alumine produits par pyrogénation et ayant les données caractéristiques physico-chimiques suivantes :

diamètre extérieur : 2 à 15 mm
surface - BET : 90 à 200 m² / g
volume des pores : 0,6 à 1,3 ml / g
résistance à la rupture : 30 à 120 N
répartition des pores : aucun pore de diamètre <5 nm
: au moins 80% des pores de
: diamètre dans la zone de 5 à
: 40 nm.
composition : >75% en poids $SiO_2$
: le reste $Al_2O_3$

caractérisé en ce que on homogénéise un mélange de silice et d'alumine produits par pyrogénation avec du Kaolin et/ou du graphite, du sucre, de l'amidon, de l'urée, de la poudre de frittes de glaçure, de la cire microcristalline, sous addition d'eau, en ce que on sèche à une température de 80 à 120°C, on réduit en poudre, on comprime la poudre en pièces moulées et on recuit pendant une durée de 0,5 à 6 heures à une température de 400 à 1050°C.

3. Utilisation des pièces moulées selon la revendication 1 comme support de catalyseur ou comme catalyseur.